# EUROPÄISCHE PATENTSCHRIFT

(11) **EP 1 802 152 B1**
(45) Veröffentlichungstag und Bekanntmachung des Hinweises auf die Patenterteilung: **27.05.2009**
(21) Anmeldenummer: 05027892.8
(22) Anmeldetag: 20.12.2005
(51) Int. Cl.: H04W 76/02

(54) **Aufbau einer Verbindung in Funk-Kommunikationssystemen**
Call set-up in radio communication systems
Etablissement d'une connexion dans des systèmes de radiocommunication

(43) Veröffentlichungstag der Anmeldung: 27.06.2007
(73) Patentinhaber: Nokia Siemens Networks GmbH & Co. KG, 81541 München (DE)
(72) Erfinder: Luo, Jijun, 80797 München (DE); Mohyeldin, Eiman Bushra, 81476 München (DE); Pan, Jianming, Dr., 1220 Wien (AT); Slanina, Peter, 3441 Judenau (AT)

(56) Entgegenhaltungen:
- WO-A-90/13211
- DE-C1- 19 734 933
- SMG2: "Global Pilot Mechanism" ETSI STC SMG2 UMTS ADHOC, TDOC SMG2 UMTS 52/97, 8. April 1977 (1977-04-08), Seiten 1-2, XP002380108 Lulea, Sweden
- "UMTS Baseline document; Positions on UMTS agreed by SMG including SMG#27 (UMTS 30.01 version 3.5.1 ; UMTS 30.01" ETSI STANDARDS, EUROPEAN TELECOMMUNICATIONS STANDARDS INSTITUTE, SOPHIA-ANTIPO, FR, Nr. V351, Januar 1999 (1999-01), XP014024551 ISSN: 0000-0001
- LE T H ET AL: "Performance of an accessing and allocation scheme for the download channel in software radio" WIRELESS COMMUNICATIONS AND NETWORKING CONFERNCE, 2000. WCNC. 2000 IEEE 23-28 SEPTEMBER 2000, PISCATAWAY, NJ, USA,IEEE, Bd. 2, 23. September 2000 (2000-09-23), Seiten 517-521, XP010532302 ISBN: 0-7803-6596-8

## Beschreibung

Die Erfindung betrifft ein Verfahren zum Aufbauen einer Verbindung in Funk-Kommunikationssystemen, insbesondere in Mobilfunksystemen, sowie Komponenten des Funk-Kommunikationssystems zum Durchführen des erfindungsgemäßen Verfahrens.

Eine stetig steigende Anzahl unterschiedlicher Funk-Kommunikationssysteme, beispielhaft seien nur die Systeme nach den bekannten Standards GSM, IS-95, UMTS, CDMA2000, WLAN, WiMAX etc. genannt, führt dazu, dass auch Teilnehmerendgeräte eine immer größere Anzahl dieser Systeme bzw. Standards unterstützen, und hierdurch dem Teilnehmer einen Zugang zu Kommunikationsnetzen in vielfältigster Weise ermöglichen. Zudem gehen Betreiber von Funk-Kommunikationssystemen zunehmend dazu über, Systeme unterschiedlicher Standards, mit der Möglichkeit, zwischen diesen Systemen zu Roamen, ihren Kunden zur Verfügung zu stellen.

All dies kann jedoch nachteilig dazu führen, dass aufgrund der großen Auswahl verfügbarer Systeme, die zudem in der Regel in unterschiedlichen systemspezifischen Frequenzbändern arbeiten, der Zeitraum für einen Aufbau einer Verbindung durch ein Teilnehmerendgerät verlängert wird. Möchte der Teilnehmer beispielsweise einen hochdatenratigen Dienst nutzen, beispielhaft sei Videostreaming genannt, so kann ein derartiger Dienst potenziell von unterschiedlichen Systemen zur Verfügung gestellt werden. Sofern seitens des Teilnehmers kein spezifisches System vorausgewählt wurde, erfolgt seitens des Teilnehmerendgerätes während des Aufbaus der Verbindung eine Kontaktaufnahme zu verschiedenen Systemen, bzw. versucht das Teilnehmerendgerät zunächst, Signale von verschiedenen Systemen - beispielsweise des gleichen Betreibers - zu empfangen und anschließend ein für den gewählten Dienst geeignetes System auszuwählen.

Insbesondere wenn das Teilnehmerendgerät an einem Ort in Betrieb genommen wird, an dem es zuvor keinerlei Verbindung zu einem System unterhalten hat und somit nicht auf Erfahrungswerte zurückgreifen kann, beispielsweise wenn sich der Teilnehmer nach einem Flug im Ausland befindet, kommt zudem ggf. erschwerend bzw. die Zugriffszeit verlängernd hinzu, dass nicht bekannt ist, mit welchem lokalen Betreiber der heimatliche Betreiber ein so genanntes Roamingabkommen geschlossen hat, um Kunden erniedrigte Verbindungsgebühren zu ermöglichen. In diesem Fall wird dem Teilnehmer ggf. mehrmals ein lokales System bzw. Betreiber vorgeschlagen, zu welchem der Teilnehmer dann entscheiden muss, ob ein Verbindungsaufbau erfolgen soll oder nicht.

Aus der DE 197 34 933 Cl ist ein Verfahren bekannt, bei dem eine in einem Funkversorgungsbereich eines Mobilfunknetzes befindliche Mobilstation durch auf einem Pilotkanal übertragene Signalisierungsinformation eine Anpassung an ein Luftschnittstellenzugangsverfahren des Mobilfunknetzes generiert. Der Pilotkanal wird dabei von zumindest einer Rundfunksendestätion eines öffentlichen Rundfunksystems in dem Funkversorgungsbereich des Mobilfunknetzes gesendet und von der Mobilstation empfangen und ausgewertet.

Um die wachsende Anzahl Systeme für Teilnehmer bzw. Teilnehmerendgeräte übersichtlich zu gestalten, wurde unter anderem in dem Dokument "Global Pilot Mechanism" Tdoc SMG2 UMTS 52/97, ETSI STC SMG2 UMTS adhoc, 8.-10. April 1997, Lulea, Schweden, S. 1 und 2, bereits vorgeschlagen, einen weltweit einheitlichen Pilotkanal (Global Pilot Channel) auf einem einheitlichen Frequenzkanal bzw. in einem einheitlichen Frequenzspektrum einzuführen. Auf einem derartigen weltweiten Pilotkanal sollten Informationen über jeweils lokal verfügbare Funkzugangstechnologien (Radio Access Technology Indicator) sowie Verweise (Spectral Pointer) auf deren spektrale Lage übertragen werden, sodass ein Teilnehmerendgerät eine geeignete bzw. unterstützte Funkzugangstechnologie auswählen und darauf zugreifen kann. Unter Funkzugangstechnologien sind dabei Systeme unterschiedlicher Standards, beispielsweise GSM und UMTS, zu verstehen, welche in unterschiedlichen Frequenzbändern operieren. Die Aussendung des Pilotkanals sollte nach obigem Dokument entweder von den Betreibern selbst, die entsprechend auch Informationen von konkurrierenden Betreibern aussenden müssten, oder aber von einer nicht näher spezifizierten nationalen Instanz, beispielsweise der Regulierungsbehörde, erfolgen.

Ein derartiger einheitlicher Pilotkanal weist jedoch den Nachteil auf, dass mit steigender Anzahl unterschiedlicher Systeme und deren Ausdehnung auf eine größere Anzahl Frequenzbänder die Signalisierungslast ebenfalls stetig steigen würde. Zudem erscheint der administrative Aufwand zur Erfassung und Aussendung von Informationen der unterschiedlichen Systeme vergleichsweise groß zu sein. Weiterhin würde ein Teilnehmerendgerät, nachdem es mittels des Pilotkanals auf das Frequenzspektrum beispielsweise des GSM-Mobilfunksystems verwiesen wurde, weiterhin eine große Anzahl Messungen von Netzen unterschiedlicher Betreiber durchführen müssen, um ein für den gewünschten Dienst oder zu dem gewünschten Tarif bzw. Vertrag geeignetes Betreibernetzwerk zu ermitteln.

Aufgabe der Erfindung ist es daher, ein Verfahren, ein System sowie Systemkomponenten anzugeben, welche es einem Teilnehmerendgerät ermöglichen, in einfacher und schneller Weise einen Verbindungsaufbau zu einem gewünschten Funk-Kommunikationssystem bzw. Netzwerk aufzubauen. Diese Aufgabe wird durch die Merkmale der unabhängigen Patentansprüche gelöst. Vorteilhafte Ausgestaltungen der Erfindung sind abhängigen Patentansprüchen entnehmbar.

Erfindungsgemäß wird von einem Teilnehmerendgerät ein Betreiber basierend auf Informationen zu zumindest einem Betreiber eines Funk-Kommunikationssystems in einem landesspezifischen Pilotkanal ausgewählt. Anschließend wählt das Teilnehmerendgerät ein Funk-Kommunikationssystem basierend auf Informationen zu zumindest einem Funk-Kommunikationssystem in einem betreiberspezifischen Pilotkanal des ausgewählten Betreibers aus, und führt schließlich einen Zugriff auf das ausgewählte Funk-Kommunikationssystem für einen Aufbau einer Verbindung durch.

Vorteilhaft wird durch den erfindungsgemäßen hierarchischen Aufbau der Pilotkanäle und einer entsprechenden Unterteilung der in den Pilotkanälen jeweils übertragenen Informationen eine einfachere und flexiblere Administration der Inhalte der Pilotkanäle gegenüber dem einleitend beschriebenen Verfahren nach dem Stand der Technik ermöglicht. So ist beispielsweise bei einer Änderung der von einem Betreiber unterstützten Systeme bzw. Netze keinerlei Änderung des Inhalts des landesspezifischen Pilotkanals erforderlich, welcher gegebenenfalls von einer übergeordneten Instanz, beispielsweise einer staatlichen Regulierungsbehörde, verwaltet wird. Vorteilhaft kann weiterhin der jeweilige Betreiber in dem ihm zugeordneten Pilotkanal beispielsweise die Zuweisung von physikalischen Ressoucen zu den einzelnen Systemen bzw. Netzen im Sinne einer dynamischen Ressourcenzuweisung dynamisch verändern, beispielsweise um eine Lastverteilung in den Systemen bzw. Netzen zu optimieren. Der Inhalt des betreiberspezifischen Pilotkanals wird dabei vorteilhaft beispielsweise durch den Betreiber selbst konfiguriert, beispielsweise mittels einer entsprechend ausgestalteten Operations- und Wartungs-Funktionalität (O&M - Operation and Maintenance). Nutzen mehrere Betreiber ein gleiches Frequenzspektrum, so sollte die aktuelle Nutzung sowie deren entsprechende Signalisierung auf den betreiberspezifischen Pilotkanälen vorzugsweise in Abstimmung miteinander erfolgen.

In gleicher Weise wird dem Teilnehmerendgerät vorteilhaft ermöglicht, eine einheitliche Verbindungsaufbauprozedur zu durchlaufen, um unabhängig von ihrem aktuellen Aufenthaltsort einen schnellen Verbindungsaufbau zu einem gewünschten System bzw. Netz durchzuführen.

Gemäß der Erfindung wird in dem landesspezifischen Pilotkanal als Information ein Verweis auf zumindest den betreiberspezifischen Pilotkanal übertragen. Mittels dieser Information kann das Teilnehmerendgerät direkt auf den betreiberspezifischen Pilotkanal zugreifen. Gleiches gilt für ein weiteres Merkmal der Erfindung, nach dem in dem betreiberspezifischen Pilotkanal als Information ein Verweis auf zumindest einen systemspezifischen Pilotkanal des zumindest einen Funk-Kommunikationssystems übertragen wird.

Einer weiteren Ausgestaltung des erfindungsgemäßen Verfahrens zufolge werden in dem systemspezifischen Pilotkanal Informationen eines Synchronisationskanals, Steuerkanals und/oder Pilotkanals übertragen. Die Informationen sind dabei von der jeweiligen Konfiguration der Funkschnittstelle bzw. dem Funkübertragungsstandard abhängig, und können system- bzw. standardabhängig einen unterschiedlichen Inhalt aufweisen.

Nach einer weiteren Ausgestaltung werden der zumindest eine betreiberspezifische Pilotkanal und der zumindest eine systemspezifische Pilotkanal von zumindest einer Funkzugangseinrichtung des zumindest einen Funk-Kommunikationssystems ausgesendet. Dies bewirkt vorteilhaft, dass die Anzahl in die Aussendung der Pilotkanäle involvierten Einrichtungen begrenzt wird. Einer weiteren Weiterbildung zufolge wird der landesspezifische Pilotkanal ebenfalls von zumindest einer Funkzugangseinrichtung des zumindest einen Funk-Kommunikationssystems und/oder einer Rundfunksendestation eines öffentlichen oder privaten Rundfunksystem ausgesendet. Die Nutzung von Rundfunksendestationen bietet dabei den Vorteil, dass durch Nutzung bereits vorhandener Einrichtungen große geographische Bereiche mit einer Funkzelle abgedeckt werden können. Eventuell durch die Größe der Funkzelle bedingte große Laufzeiten der ausgesendeten Signale wirken dabei nicht negativ, da die Signalübertragung ausschließlich in Abwärtsrichtung, d.h. in Richtung der Teilnehmerendgeräte erfolgt.

Gemäß einer weiteren Ausgestaltung der Erfindung werden in dem landesspezifischen Pilotkanal zusätzlich Informationen zu Betreibern übertragen, mit denen der zumindest eine Betreiber nationale und/oder internationale Roamingabkommen unterhält. Dies ermöglich einem Teilnehmerendgerät, welches sich außerhalb seines Heimatnetzes befindet, in einfacher Weise einen überblick über die lokal verfügbaren Betreiber zu bekommen und schließlich einen Betreiber auszuwählen. Die Informationen zu Betreibern mit Roamingabkommen können dabei gemäß einer weiteren Weiterbildung in spezifischen Rahmen innerhalb einer Abfolge von Rahmen des landesspezifischen Pilotkanals übertragen werden.

Schließlich wird nach einer weiteren Ausgestaltung der Erfindung eine Rekonfigurierbarkeit des Teilnehmerendgerätes mittels einer Übertragung von Informationen bezüglich einer systemspezifischen Konfiguration des Teilnehmerendgerätes in dem betreiberspezifischen Pilotkanal unterstützt, wodurch vorteilhaft eine Anpassung des Teilnehmerendgerätes auf das Funkzugriffsverfahren des ausgewählten Systems bereits vor einem Zugriff auf das System erfolgen kann.

Das erfindungsgemäße System sowie Systemkomponenten weisen jeweils erfindungsgemäße Einrichtungen auf, mit denen das erfindungsgemäße Verfahren verwirklicht werden kann.

Die Erfindung wird nachfolgend anhand eines Ausführungsbeispiels näher dargestellt. Dabei zeigen
- FIG 1: eine Darstellung von Abdeckungsbereichen jeweiliger Pilotkanäle,
- FIG 2: eine Darstellung der hierarchischen Struktur der Pilotkanäle sowie deren Inhalten,
- FIG 3: ein Ablaufdiagramm eines Zugriffs eines Teilnehmerendgerätes auf ein System,
- FIG 4: eine Abfolge von Rahmen eines landesspezifischen Pilotkanals,
- FIG 5a,5b: Strukturen von Rahmen mit Informationen bezüglich Betreibern mit Roamingabkommen,
- FIG 6: die Struktur eines betreiberspezifischen Rahmens mit einem Teilfeld für rekonfigurierbare Endgeräte, und
- FIG 7: eine Darstellungen von Systemkomponenten.

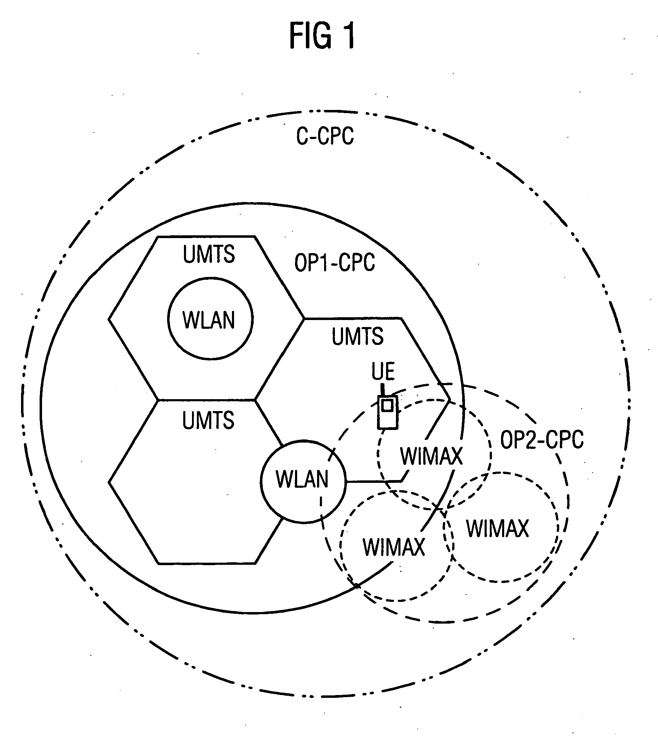

In FIG 1 sind beispielhaft die jeweiligen Abdeckungsbereiche der erfindungsgemäßen Pilotkanäle dargestellt. Es sei dabei angenommen, dass ein landesspezifischer Pilotkanal C-CPC (Country level Common Pilot Channel) auf dem Staatsgebiets eines Landes, beispielsweise der Bundesrepublik Deutschland, Informationen über die in dem Staatsgebiet operierenden Funk-Kommunikationssysteme ausstrahlt. Der landesspezifische Pilotkanal C-CPC wird beispielsweise von Rundfunksendestationen abgestrahlt, um eine landesweite Empfangbarkeit zu gewährleisten. Dies kann entsprechend einem zellularen System erfolgen, d.h. mittels einer Vielzahl von Sendestationen, welche ein jeweiliges Gebiet versorgen, wobei bei Nutzung eines landesweit gleichen Frequenzbandes eine Trennung zwischen den einzelnen Funkzellen beispielsweise mittels einer CDMA-Trennung erfolgt. Prinzipien von so genannten Gleichwellensystemen sind in gleicher Weise anwendbar.

Entsprechend dem einleitend beschriebenen Vorschlag zur Realisierung eines weltweiten Pilotkanals ist der landesspezifische Pilotkanal C-CPC vorzugsweise gemäß einer weltweit einheitlichen Struktur organisiert, d.h. er wird weltweit in einem einheitlichen Frequenzband bzw. in einer begrenzten Anzahl möglicher Frequenzbänder ausgesendet, und nutzt eine einheitlich konfigurierte Funkschnittstelle, d.h. eine einheitliche Kodierung, Modulation etc. Hierdurch wird vorteilhaft ein schneller und sicherer Zugriff von Teilnehmerendgeräten auf diese Pilotkanäle ermöglicht.

Auf dem Gebiet eines Staates betreibt in der Regel eine Vielzahl von Betreibern Funk-Kommunikationssysteme, welche gegebenenfalls auch unterschiedliche Systemstandards unterstützen. Stellvertretend für das Versorgungsgebiet eines ersten, landesweit operierenden, Betreibers OP1 sind in FIG 1 beispielhaft drei Funkzellen eines Mobilfunksystems nach dem UMTS-Standard sowie zwei Funkzellen eines lokalen drahtlosen Anschlussnetzes nach dem WLAN-Standard (IEEE 802.11) dargestellt. Letztlich ist dabei anzunehmen, dass der Versorgungsbereich eines landesweit operierenden Betreibers dem gewünschten Abdeckungsbereich des landesspezifischen Pilotkanals C-CPC weitestgehend entspricht, sodass alternativ zu oben genannter Ausstrahlung des landesspezifischen Pilotkanals C-CPC mittels Rundfunksendestationen auch eine Aussendung durch die Systeme der Betreiber selbst erfolgen kann.

Neben dem landesweit operierenden ersten Betreiber OP1 ist in der FIG 1 beispielhaft noch der Versorgungsbereich eines zweiten, lokal operierenden, Betreibers OP2 mit drei Funkzellen eines drahtlosen Anschlusssystems nach dem so genannten WiMAX-Standard (IEEE 802.16) dargestellt.

Beispielhaft ist weiterhin ein Teilnehmerendgerät UE zargestellt, welches sich in dem Versorgungsbereich von Systemen bzw. Netzen sowohl des ersten OP1 als auch des zweiten Betreibers OP2 befindet, und somit potenziell in der Lage ist, zu jedem dieser Systeme eine Verbindung aufzubauen. Es sei für nachfolgende Erläuterungen angenommen, dass das Teilnehmerendgerät UE technisch zur Unterstützung der drei beispielhaft genannten Standards ausgebildet ist, wobei das Verfahren in gleicher Weise für Teilnehmerendgeräte, welche nur einen der Standards unterstützen, durchführbar ist.

In der beispielhaften Situation der FIG 1 sei ferner angenommen, dass das Teilnehmerendgerät UE zum ersten Mal eingeschaltet bzw. in Betrieb genommen wird. Dies tritt beispielsweise nach Kauf des Endgerätes durch den Teilnehmer oder nach Ankunft auf dem Flughafen nach einer Reise aus einem anderen Land auf. Für eine erste Kontaktaufnahme zu einem am Ort der Teilnehmerendgerätes operierenden System wird sich das Teiltnehmerendgerät zunächst auf das Frequenzband des landesspezifischen Pilotkanals C-CPC abstimmen, diesen empfangen und darin enthaltene Informationen auswerten, sowie nachfolgend einen geeigneten oder vorgegebenen Betreiber, beispielsweise aufgrund von auf der SIM-Karte gespeicherten Betreiberinformationen oder Roamingabkommen von Betreibern, auswählen. Das Frequenzband sowie die Zugangstechnologie des landesspezifischen Pilotkanals C-CPC ist dem Teilnehmerendgerät UE dabei, wie vorstehend erwähnt, vorzugsweise per se bekannt, sodass ein gezielter und schneller Zugriff auf den landesspezifischen Pilotkanal C-CPC erfolgen kann.

Ausgehend von den in dem landesspezifischen Pilotkanal C-CPC enthaltenen Informationen wählt das Teilnehmerendgerät UE somit einen geeigneten bzw. vorgegebenen Betreiber aus, und stimmt die Empfangseinrichtung anschließend mittels eines in den Informationen des landesspezifischen Pilotkanals C-CPC enthaltenen Verweises auf den betreiberspezifischen Pilotkanal des ausgewählten Betreibers ab.

Eine vorstehend beschriebene zellulare Struktur des landesspezifischen Pilotkanals ermöglicht vorteilhaft, regionale bzw. örtliche Besonderheiten zu berücksichtigen, und hierdurch die in dem Pilotkanal zu übertragende Informationsmenge zu begrenzen. So könnten beispielsweise für den Fall, dass ein Betreiber örtlich begrenzt und somit ausschließlich in einer bestimmten der Vielzahl Zellen des landesspezifischen Pilotkanals operiert, Informationen und ein Verweis auf diesen Betreiber ausschließlich in dieser Zelle ausgesendet werden, währenddessen in allen weiteren Zellen des landesspezifischen Pilotkanals, in denen dieser Betreiber nicht operiert, keinerlei Informationen zu diesem Betreiber ausgesendet werden. Entsprechendes würde gelten, wenn ein Betreiber beispielsweise ausschließlich in Stadtgebieten drahtlose Anschlussnetze betreibt. In diesem Fall wäre es ausreichend, dass lediglich die Zellen des landesspezifischen Pilotkanals, welche die betroffenen Stadtgebieten umfassen, Informationen und Verweise auf diesen Betreiber aussenden.

In dem betreiberspezifischen Pilotkanal wiederum werden Informationen bezüglich der von dem Betreiber unterstützten Systeme bzw. Netze übertragen, sodass das Teilnehmerendgerät UE nachfolgend ein geeignetes System bzw. Netz auswählen und darauf zugreifen kann. Auf das ausgewählte System bzw. Netz wird das Teilnehmerendgerät UE vorzugsweise wiederum mittels eines in den Informationen des betreiberspezifischen Pilotkanals enthaltenen Verweises auf einen systemspezifischen Pilotkanal, Synchronisationskanal oder Steuerkanal verwiesen. Der Begriff Pilotkanal wird nachfolgend als Synonym für solche systemspezifischen Kanäle verwendet. Der betreiberspezifische Pilotkanal wird dabei entsprechend dem landesspezifischen Pilotkanal vorzugsweise in einem einheitlichen Frequenzband, beispielsweise in einem Unterfrequenzband des landesspezifischen Pilotkanals, übertragen, um einen schnellen Zugriff durch das Teilnehmerendgerät zu ermöglichen, wobei alternativ wiederum eine begrenzte Anzahl Frequenzbänder ebenfalls möglich und sinnvoll erscheint.

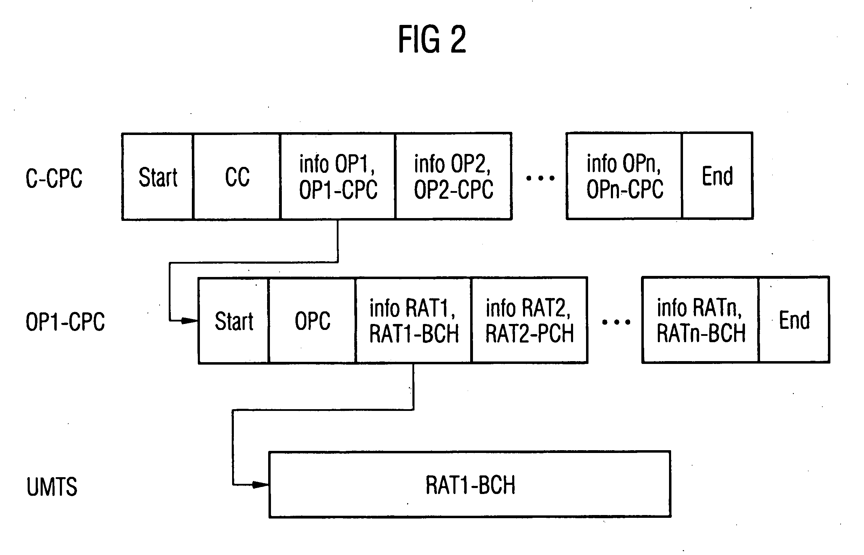

Die erfindungsgemäße hierarchische Struktur der Pilotkanäle sowie eine jeweilige beispielhafte Rahmenstruktur ist Bezug nehmend auf die Situation der FIG 1 beispielhaft in der FIG 2 dargestellt.

Der länderspezifische Pilotkanal C-CPC setzt sich beispielsweise aus den in FIG 2 dargestellten mehreren Teilfeldern unterschiedlichen Inhalts zusammen, wobei diese Teilfelder im Sinne der Erfindung auch in einer anderen Reihenfolge übertragen werden können. Die Teilfelder ergeben zusammen einen Rahmen, welcher periodisch, wie vorstehend erwähnt, beispielsweise von Rundfunksendestationen bzw. Betreiberstationen ausgesendet wird.

Der Beginn eines Rahmens ist durch ein Startfeld bzw. eine Startsequenz Start gekennzeichnet. Dieses Feld Start kann eine Information über die Identität des Pilotkanals,beispielsweise hinsichtlich der Tatsache, dass es sich um einen länderspezifischen Pilotkanal im Unterschied zu einem betreiberspezifischen Pilotkanal handelt, aber auch eine Synchronisationssequenz, welche einem Teilnehmerendgerät ermöglicht, sich auf die Übertragung in dem Pilotkanal zu synchronisieren, sowie zur Erfassung des Beginns eines jeweiligen Rahmens, beinhalten.

In einem dem Startfeld Start folgenden zweiten Teilfeld des länderspezifischen Pilotkanals C-CPC wird vorzugsweise eine Länderkennung CC (Country Code) übertragen, aufgrund derer das empfangende Teilnehmerendgerät UE den Staat, auf dessen territorialen Gebiet es sich aktuell befindet, identifizieren kann. Diese Länderkennung CC kann von dem Teilnehmerendgerät beispielsweise zum Abgleich mit auf der SIM-Karte oder einem integrierten Speicher gespeicherten Informationen zu Betreibern dieses Staates, beispielsweise bezüglich existierender Roamingabkommen, verwendet werden.

Dem zweiten Teilfeld der Länderkennung CC folgend werden in jeweiligen Teilfeldern Informationen info bezüglich der in dem Abdeckungsbereich des länderspezifischen Pilotkanals C-CPC operierenden Betreiber OP1, OP2,..., OPn, einschließlich eines jeweiligen Verweises auf den bzw. die betreiberspezifischen Pilotkanäle OP1-CPC, OP2-CPC,..., OPn-CPC (Operator level Common Pilot Channel) übertragen. Diese Informationen ermöglichen dem Teilnehmerendgerät UE nach Auswertung und vorstehend genanntem Abgleich eine Auswahl eines geeigneten Betreibers, in dem Beispiel der FIG 2 des ersten Betreibers OP1, und einen direkten Zugriff auf den oder die Pilotkanäle OP1-CPC dieses ausgewählten ersten Betreibers OP1 mittels des Verweises.

Schließlich wird ein Rahmen des länderspezifischen Pilotkanals C-CPC vorzugsweise durch ein Teilfeld mit einer Schlusssequenz End abgeschlossen. Bei einer periodischen Wiederholung der Übertragung des Rahmens und eindeutiger Identifizierbarkeit des Beginns eines Rahmens mittels des Startfeldes kann jedoch auch von einer Übertragung des Teilfeldes der Schlusssequenz End abgesehen werden.

In der Hierarchieebene der Betreiber wird eine entsprechende Rahmenstruktur eines Pilotkanals verwendet, jedoch mit zumindest teilweise unterschiedlichem Inhalt der Teilfelder. Auch der betreiberspezifische Pilotkanal wird vorzugsweise periodisch wiederholt ausgesendet. In der FIG 2 ist beispielhaft die Rahmenstruktur des betreiberspezifischen Pilotkanals OP1-CPC des von dem Teilnehmerendgerät UE ausgewählten ersten Betreibers OP1 dargestellt

Da der betreiberspezifische Pilotkanal OP1-CPC in der Regel in einem von dem landesspezifischen Pilotkanal C-CPC disjunkten Frequenzband ausgesendet wird, ist wiederum eine Kennzeichnung des Beginns eines jeweiligen Rahmens mittels eines Startfeldes Start sinnvoll. Dieses Feld Start,kann entsprechend dem beschriebenen Feld des landesspezifischen Pilotkanals C-CPC wiederum eine Information über die Identität des Pilotkanals, beispielsweise hinsichtlich der Tatsache, dass es sich um einen betreiberspezifischen Pilotkanal im Unterschied zu dem landesspezifischen Pilotkanal C-CPC handelt, aber auch eine Synchronisationssequenz, welche einem Teilnehmerendgerät ermöglicht, sich auf die Übertragungen in dem Pilotkanal zu synchronisieren, beinhalten. Ein Rahmen des betreiberspezifischen Pilotkanals OP1-CPC wird vorzugsweise wiederum durch ein Teilfeld mit einer Schlusssequenz End abgeschlossen, wobei bei einer periodischen Wiederholung der Übertragung des Rahmens und eindeutiger Identifizierbarkeit des Beginns eines Rahmens mittels des Startfeldes gegebenenfalls von einer Übertragung des Teilfeldes der Schlusssequenz End abgesehen werden kann.

Alternativ zu einer Nutzung eines zu dem Frequenzband des landesspezifischen Pilotkanals disjunkten Frequenzband für die Übertragung der betreiberspezifischen Pilotkanäle kann vorteilhaft auch ein gemeinsames Frequenzspektrum verwendet werden, wobei eine Trennung der einzelnen Pilotkanäle beispielsweise mittels einer jeweiligen Zuweisung eines oder mehrerer Unterfrequenzbänder im Sinne einer FDMA-Trennung (Frequency Division Multiple Access), und/oder mittels weiterer bekannter Verfahren wie beispielsweise TDMA (Time Division Multiple Access)oder CDMA (Code Division Multiple Access) erfolgen kann. In gleicher Weise kann eine Trennung zwischen Pilotkanälen auf Landes- oder Betreiberebene erfolgen, wenn für Übertragungen in benachbarten Zellen ein gleiches Frequenzband genutzt wird.

In einem dem Startfeld Start folgenden Teilfeld wird beispielsweise eine Betreiberkennung OPC (Operator Code) über-, tragen, mittels welcher das Teilnehmerendgerät UE bzw. ein anderes auf diesen Pilotkanal OP1-CPC zugreifendes Teilnehmerendgerät den ersten Betreiber OP1 identifizieren kann.

In dem Teilfeld der Betreiberkennung OPC nachfolgenden Teilfeldern werden Informationen info bezüglich der in dem Abdeckungsbereich des betreiberspezifischen Pilotkanals OP1-CPC verfügbaren Systeme bzw. Systemtechnologien RAT1, RAT2,..., RATn (Radio Access Technologie) einschließlich eines jeweiligen Verweises auf den bzw. die systemspezifischen Pilot- bzw. Steuerkanäle RAT1-BCH, RAT2-PCH, ..., RATn-BCH übertragen. Diese Informationen ermöglichen dem Teilnehmerendgerät UE nach Auswertung und Abgleich mit den eigenen technischen Fähigkeiten, beispielsweise der Unterstützung lediglich einer Anzahl der verfügbaren Systemtechnologien, eine Auswahl eines geeigneten Systems.

Nach dem Beispiel der FIG 1 würde das Teilnehmerendgerät UE in dem Pilotkanal OP1-CPC des ersten Betreibers OP1 Informationen zu den im Abdeckungsbereich des Pilotkanals OP1-CPC betriebenen Systemen nach dem UMTS- und WLAN-Standard empfangen, und beispielsweise für einen ersten Zugriff mit dem Ziel eines Verbindungsaufbaus das UMTS-System auswählen. Entsprechend sei in der FIG 2 angenommen, dass das UMTS-System durch die Angabe der ersten Systemtechnologie RAT1 repräsentiert wird. Da sich das Teilnehmerendgerät UE mithin aktuell in dem Abdeckungsbereich einer Funkzelle des UMTS-Systems aufhält, ist nach Auswertung des Verweises auf den Steuerkanal des UMTS-Systems RAT1-BCH ein Zugriff auf dieses System möglich. Hierzu ist in der nächsten Hierarchieebene, d.h. auf Systemebene, in der FIG 2 beispielhaft ein Rahmen eines Steuerkanals des UMTS-Systems RAT1-BCH dargestellt.

Sofern das Teilnehmerendgerät UE in der dargestellten Situation der FIG 1 jedoch das WLAN-System auswählen sollte, welches in der FIG 2 beispielhaft durch die Systemtechnologie RAT2 repräsentiert wird, könnte es nach Auswertung des Verweises auf den Pilotkanal des WLAN-Systems RAT2-PCH nicht auf diesen Pilotkanal zugreifen, da es sich aktuell außerhalb des Abdeckungsbereiches einer Funkzelle des WLAN-Systems aufhält. In diesem Fall wird das Teilnehmerendgerät UE nach Ermittlung, dass ein Empfang des Pilotkanals des WLAN-Systems RAT2-PCH nicht möglich ist, durch nochmaligen Zugriff auf den betreiberspezifischen Pilotkanal OP1-CPC ein alternatives System, beispielsweise das durch die erste Systemtechnologie RAT1 gekennzeichnete UMTS-System, auswählen und auf dieses nachfolgend zugreifen. Sofern auch dieses neu ausgewählte System für das Teilnehmerendgerät UE nicht empfangbar ist und/oder der ausgewählte Betreiber kein für das Teilnehmerendgerät UE nutzbares alternatives System betreibt, kann das Teilnehmerendgerät UE wiederum auf den länderspezifischen Pilotkanal C-CPC zugreifen und einen neuen Betreiber auswählen.

Der betreiberspezifische Pilotkanal OP1-CPC mit Informationen zu den von dem jeweiligen Betreiber betriebenen Systemen ermöglicht vorteilhaft, dass der Betreiber beispielsweise eine Lastverteilung zwischen den einzelnen System steuern kann. So könnte nach dem Beispiel der FIG 1 und 2 der erste Betreiber OP1 bei voller Auslastung bzw. Überlastung des WLAN-Systems die Übertragung von Informationen zu diesem System in dem Pilotkanal OP1-CPC und damit den potenziellen Zugriff von Teilnehmerendgeräten auf dieses System solange unterdrücken, bis eine Lastsituation, welche die Aufnahme weiterer Verbindungen erlaubt, wiederhergestellt ist. Alternativ hierzu können die aktuellen Lastsituationen der einzelnen betriebenen Systeme auch mittels spezifischer Informationen, beispielsweise mittels eines Statusanzeigers in den Informationen info zu der Systemtechnologie, den Teilnehmerendgeräten signalisiert werden.

Auch eine Anzeige der Verteilung von physikalischen Ressourcen erscheint durch eine Änderung der Informationen in den Teilfeldern des betreiberspezifischen Pilotkanals möglich, um beispielsweise einen Lastausgleich zwischen Systemen zu erzielen. Falls beispielsweise zwei Systeme innerhalb eines Abdeckungsbereiches ein gemeinsames Frequenzband nutzen, so wird abhängig davon, welches der beiden Systeme aktuell das Frequenzband nutzt, ein entsprechender Verweis zu einem diesem Frequenzband zugehörigen Pilot- bzw. Steuerkanal in dem Teilfeld signalisiert.

Ergänzend zu den vorstehend beschriebenen Verweisen in dem landesspezifischen und den betreiberspezifischen Pilotkanälen auf die Pilot- bzw. Steuerkanäle der jeweils nächst niedrigeren Hierarchieebene kann es sinnvoll sein, ebenfalls einen Verweis auf die nächst höhere Hierarchieebene der Pilotkanäle aufzunehmen. So könnte in dem Beispiel der FIG 2 der Steuerkanal RAT1-BCH des UMTS-Systems in gleicher Weise einen Verweis auf den Pilotkanal OP1-CPC des ersten Betreibers OP1 enthalten. Ein Teilnehmerendgerät UE, welches eine aktive Verbindung zu dem UMTS-System unterhält, könnte durch diesen Verweis direkt auf den Pilotkanal des Betreibers OP1-CPC zugreifen, beispielsweise zur Vorbereitung einer Intersystem-Verbindungsweiterschaltung oder eines Aufbaus eines zusätzlichen Dienstes.

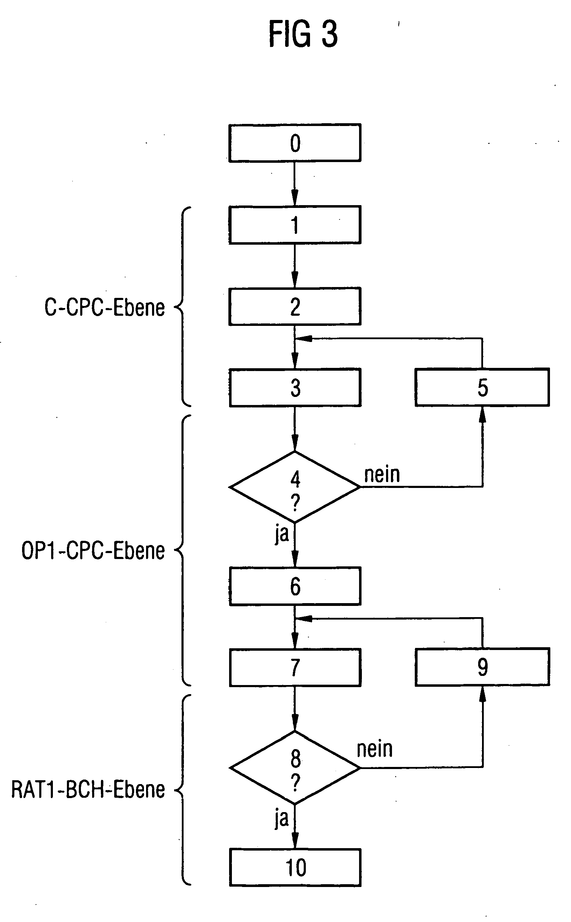

Nachfolgend werden Bezug nehmend auf das beispielhaft dargestellte Ablaufdiagramm der FIG 3 unterschiedliche Prozeduren des erfindungsgemäßen Zugriffs eines Teilnehmerendgerätes auf die unterschiedlichen Pilotkanäle bzw. Steuerkanäle beschrieben.

Zunächst wird eine erste beispielhafte Prozedur ausgehend von der Situation beschrieben, dass das Teilnehmer-Endgerät UE keinerlei Kenntnisse über verfügbare Systeme hat. Diese Situation tritt beispielsweise bei einer erstmaligen Inbetriebnahme oder einem Einschalten des Teilnehmerendgerätes nach einer Reise außerhalb des Heimatlandes auf.

Nach Einschalten bzw. Inbetriebnahme, Schritt 0, des Teilnehmerendgerätes UE wird dieses zum Aufbau einer Verbindung zu einem Netzwerk bzw. System zunächst nach einem landesspezifischen Pilotkanal C-CPC suchen, Schritt 1. Sofern, wie vorstehend erläutert, landesspezifische Pilotkanäle C-CPC weltweit in einem oder mehreren einheitlichen Frequenzbändern ausgesendet werden, wird das Teilnehmerendgerät UE seine Empfängseinrichtung auf dieses Frequenzband abstimmen bzw. die möglichen Frequenzbänder nach Signalen eines landesspezifischen Pilotkanals C-CPC absuchen. Das bzw. die für den landesspezifischen Pilotkanal verwendeten Frequenzbänder sind dem Teilnehmerendgerät UE, beispielsweise durch Hinterlegung diesbezüglicher Informationen auf der SIM-Karte des Teilnehmers oder einem Speicher des Teilnehmerendgerätes, bekannt. Mithin ist dem Teilnehmerendgerät UE das für die Übertragung des Pilotkanals verwendete Übertragungsverfahren, beispielsweise die Kodierung, Modulation etc. bekannt, sodass eine schnelle Detektion und anschließender Empfang eines landesspezifischen Pilotkanals C-CPC durch das Teilnehmerendgerät UE möglich ist. Bei einer ausschließlich für den Empfang von landesspezifischen Pilotkanälen ausgestalteten Empfangseinrichtung, beispielsweise ein RDS-Empfänger (Radio Data System) für öffentliche Rundfunksysteme, sind derartige Informationen entsprechend nicht bzw. nur begrenzt auf das Übertragungsverfahren erforderlich.

Nach Empfangen und Auswerten, Schritt 2, der in dem landesspezifischen Pilotkanal C-CPC übertragenen Informationen, wählt das Teilnehmerendgerät UE zunächst einen geeigneten Betreiber aus, Schritt 3. Dies erfolgt entsprechend den vorstehend zu den FIG 1 und 2 beschriebenen Verfahren. Nach Auswertung der in dem landesspezifischen Pilotkanal C-CPC übertragenen Länderkennung CC weiß das Teilnehmerendgerät UE beispielsweise; ob es sich in dem Abdeckungsbereich des Heimatbetreibers aufhält, oder ob es Roamingabkommen zwischen dem Heimatbetreiber und ausländischen Betreibern für die Auswahl eines am aktuellen Aufenthaltsort des Teilnehmerendgerätes verfügbaren Betreibers berücksichtigen muss. Hierzu erfolgt beispielsweise ein Abgleich mit auf der SIM-Karte gespeicherten Informationen bezüglich des Heimatbetreibers sowie dessen Roamingpartner. Sofern kein direkter Roamingpartner bekannt ist, wählt das Teilnehmerendgerät UE zunächst wahlfrei einen der verfügbaren Betreiber aus. Diese Situation wird nachfolgend noch ausführlicher dargestellt

Nach Auswahl eines Betreibers stimmt das Teilnehmerendgerät UE die Empfangseinrichtung auf den Pilotkanal, beispielsweise den Pilotkanal OP1-CPC des ausgewählten ersten Betreiber OP1, ab. Dies erfolgt unter Berücksichtigung des Verweises in den Informationen des betreiberspezifischen Teilfeldes des landesspezifischen Pilotkanals C-CPC. Abhängig davon, ob das Teilnehmerendgerät UE in der Lage ist, den Pilotkanal OP1-CPC des ausgewählten Betreibers zu empfangen, Schritt 4, wird es, bei einer hinreichenden Empfangbarkeit des Pilotkanals, dessen Informationen auswerten, Schritt 6, oder, bei keiner oder nur unzureichenden Empfangbarkeit des Pilotkanals, den ausgewählten Betreiber sperren, Schritt 5, und eine Neuauswahl, Schritt 3, eines geeigneten Betreibers durchführen.

Nach Auswertung der Informationen des betreiberspezifischen Pilotkanals, nach dem Beispiel der FIG 1 und 2 der Pilotkanal OP1-CPC des ersten Betreibers OP1, wählt das Teilnehmerendgerät UE ein geeignetes System bzw. Netzwerk aus, Schritt 7. Diese Auswahl erfolgt, wie vorstehend beschrieben, beispielsweise abhängig von der technischen Ausstattung des Teilnehmerendgerätes bzw. dem aufzubauenden Dienst. Nach Auswahl eines Systems bzw. Netzwerkes, nach dem Beispiel der FIG 1 und 2 das UMTS-System, stimmt das Teilnehmerendgerät UE die Empfangseinrichtung auf den Steuerkanal RAT1-BCH ab, um diesen zu empfangen und dessen Inhalt auszuwerten. Falls das Teilnehmerendgerät UE den Steuerkanal RAT1-BCH hinreichend empfangen kann und/oder das System keine Überlastung und damit Sperrung des Zugriffs anzeigt, Schritt 8, wird es diesen empfangen und auswerten, Schritt 10, um nachfolgend einen Zugriff auf das System nach den durch den Standard des Systems vorgegebenen Mechanismen durchzuführen. Sollte das Teilnehmerendgerät UE hingegen nicht in der Lage sein, den Steuerkanal RAT1-BCH des ausgewählten Systems zu empfangen, beispielsweise, weil es sich aktuell außerhalb einer Funkzelle des Systems aufhält, oder eine Überlastung des Systems angezeigt sein, so wird es das ausgewählte System sperren, Schritt 9, und eine erneute Auswahl eines geeigneten Systems treffen, Schritt 7.

Sofern sich nach einem Zugriff durch das Teilnehmerendgerät UE auf das ausgewählte UMTS-System herausstellt, dass dies beispielsweise den gewünschten aufzubauenden Dienst nicht unterstützt, so führt das Teilnehmerendgerät UE wiederum eine Neuauswahl eines alternativen Systems des Betreibers, nach dem Beispiel der FIG 1 und 2 das WLAN-System, durch. Falls jedoch keine alternativen Systeme des Betreibers verfügbar sind oder das Teilnehmerendgerät UE auch auf das neu ausgewählten System nicht zugreifen kann, da es sich, wie in der FIG 1 beispielhaft angegeben, außerhalb des Abdeckungsbereiches bzw. Zelle des WLAN-Systems aufhält, führt das Teilnehmerendgerät UE eine Neuauswahl eines alternativen Betreibers unter nochmaligen Zugriff auf den landesspezifischen Pilotkanal C-CPC durch.

Eine weitere beispielhafte Situation tritt auf, wenn das Teilnehmerendgerät UE bereits Kenntnisse des zuletzt verwendeten Systems hat. Diese können in Form einer Speicherung von Verbindungsparametern der letzten aktiven Verbindung vorliegen. In diesem Fall wird das Teilnehmerendgerät UE nach Einschalten zunächst versuchen, den zuletzt verwendeten Steuer- bzw. Pilotkanal wieder zu empfangen. Ist dies nicht möglich, da das Teilnehmerendgerät UE seit der letzten aktiven Verbindung beispielsweise seinen Aufenthaltsort verändert hat, so wird es versuchen, auf den betreiberspezifischen Pilotkanal des zuletzt verwendeten Betreibers zuzugreifen, um ein neuen System bzw. Netzwerk auszuwählen. Hierzu kann es beispielsweise einen in dem Steuerkanal des Systems übertragenen Verweis auf den betreiberspezifischen Pilotkanal verwenden. Sollte auch dies nicht möglich sein, so wird das Teilnehmerendgerät UE letztlich auf den landesspezifischen Pilotkanal C-CPC zugreifen und entsprechend obiger Beschreibung sukzessive einen Betreiber und ein System auswählen

Alternativ zu vorstehender Beschreibung ist jedoch bei jedem neuen Einschalten des Teilnehmerendgerätes UE, ohne auf Erfahrungen der letzten aktiven Verbindung zurückzugreifen, das zu FIG 3 beschriebenes Verfahren durchführbar, bei dem das Teilnehmerendgerät zunächst immer auf den landesspezifischen Pilotkanal zugreift. Somit existieren in dieser Situation zumindest die zwei beschriebenen Ansätze, ausgehend von der untersten Hierarchieebene, d.h. dem systemspezifischen Pilotkanal, oder der obersten Hierarchieebene, d.h. dem landesspezifischen Pilotkanal. Die Verwendung eines dieser Ansätze ist dem Teilnehmerendgerät dabei vorgegeben, oder kann adaptiv von dem Teilnehmerendgerät ausgewählt werden.

Um die Anzahl erfolgloser Zugriffe durch das Teilnehmerendgerät auf Systeme, die an dem aktuellen Aufenthaltsort des Teilnehmerendgerätes nicht verfügbar sind, zu reduzieren, erscheint die Nutzung von Positionsinformationen sinnvoll. Sofern dem Teilnehmerendgerät die eigene Position bekannt ist, beispielsweise aufgrund eines integrierten GPS-Empfängers oder anderer bekannter Verfahren, kann ein teilnehmerendgeräteseitiger Abgleich mit Informationen über den jeweiligen geographischen Abdeckungsbereich der Systeme durchgeführt werden. Informationen über diesen Abdeckungsbereich können beispielsweise in die Informationen über das jeweilige System in den Teilfeldern des betreiberspezifischen Pilotkanals aufgenommen werden. In dem Beispiel der FIG 2 würde der erste Betreiber OP1 in seinem Pilotkanal OP1-CPC beispielsweise die jeweiligen geographischen Netzabdeckungsbereiche des UMTS-und WLAN-Systems angeben.

Alternativ oder ergänzend hierzu können derartige Informationen über einen jeweiligen geographischen Abdeckungsbereich der Betreiber bzw. deren Pilotkanäle auch in den landesspezifischen Pilotkanal aufgenommen werden. So würden nach dem Beispiel der FIG 2 in dem landesspezifischen Pilotkanal C-CPC die jeweiligen geographischen Netzabdeckungsbereiche des ersten OP1 und zweiten Betreibers OP2 angegeben werden. Ein Abgleich der aktuellen Position mit dem Abdeckungsbereich des Systems würde nach dem Ablaufdiagramm der FIG 3 ergänzend in dem Schritt 4 bzw. 8 erfolgen.

Beziehungen zwischen einzelnen Betreibern im Sinne von Rosamingabkommen unterliegen stetigen Änderungen. Da eine Liste von Roamingpartnern des Heimatbetreibers nach dem Stand der Technik üblicherweise vor der ersten Inbetriebnahme in der SIM-Karte eines Teilnehmers abgelegt und nachfolgend nicht mehr erneuert wird, kann diese bereits nach kurzer Zeit nicht mehr gültig sein. Hält sich ein Teilnehmerendgerät nach obiger Beschreibung außerhalb des Abdeckungsbereiches seines Heimatbetreibers auf, so wird es unter Nutzung des landesspezifischen Pilotkanals vorzugsweise einem Betreiber auswählen, mit dem der Heimatbetreiber ein Roamingabkommen abgeschlossen hat, um beispielsweise geringere Gebühren zahlen zu müssen oder spezielle Dienste nutzen zu können. Wählt das Teilnehmerendgerät in dieser Situation jedoch aufgrund einer veralteten Liste von Roamingpartnern einen Betreiber aus, mit dem kein Abkommen mehr besteht, so würden für den Teilnehmer beispielsweise nachteilig höhere Gebühren als von ihm erwartet anfallen.

Um dem Teilnehmerendgerät die Wahl eines Betreibers, mit dem ein Roamingabkommen besteht, zu erleichtern und eine Aktualität der Informationen sicherzustellen, wird nach einer Ausgestaltung der Erfindung vorgeschlagen, Informationen zu Roamingabkommen auf der Hierarchieebene des landesspezifischen Pilotkanals C-CPC zu übertragen. Diese Informationen können im Gegenzug von dem Teilnehmerendgerät für eine Aktualisierung der gespeicherten Liste von Roamingpartnern verwendet werden, unabhängig davon, ob sich der Teilnehmer in Gebiet seines Heimatnetzes befindet oder nicht.

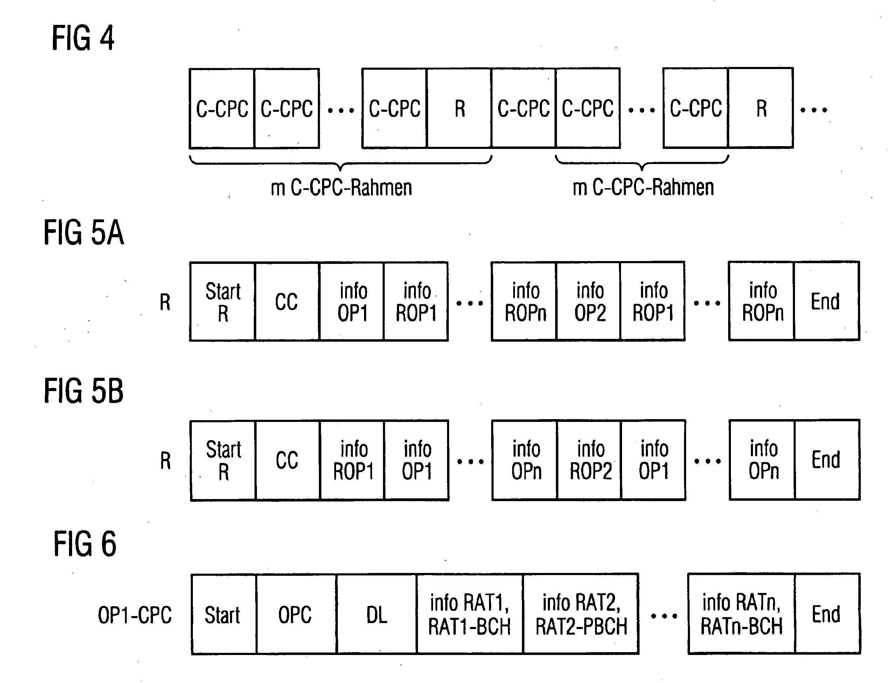

Die Übertragung der Informationen kann nach der FIG 2 beispielsweise mittels einer Ergänzung der Informationen info in den betreiberspezifischen Teilfeldern des C-CPC-Rahmens erfolgen. Alternativ hierzu können, wie in FIG 4 beispielhaft dargestellt, spezielle Rahmen R innerhalb der Folge von Rahmen des landesspezifischen Pilotkanals C-CPC zur Übertragung von Informationen zu Roamingabkommen der in den Teilfeldern des landesspezifischen Pilotkanals C-CPC aufgeführten Betreiber verwendet werden. Beispielsweise wird nach einer Abfolge von jeweils m Rahmen des landesspezifischen Pilotkanals C-CPC ein Rahmen R mit Informationen zu Roamingabkommen übertragen. Das Auftreten des speziellen Rahmens R innerhalb der Abfolge von C-CPC-Rahmen kann beispielsweise in den Start-Feldern Start der C-CPC-Rahmen signalisiert werden, sodass ein Teilnehmerendgerät bei Kenntnis der Tatsache, dass der nächste spezielle Rahmen erst in einem bestimmten zeitlichen Abstand empfangbar ist, für diesen Zeitraum die Empfangseinrichtung abschalten und hierdurch vorteilhaft Energie einsparen

Eine beispielhafte Struktur eines derartigen Rahmens R mit Informationen zu betreiberspezifischen Roamingabkommen ist in FIG 5a dargestellt. Entsprechend der Rahmenstruktur der FIG 2 beginnt ein Rahmen R mit einem Startfeld Start R zum Anzeigen des Beginns des Rahmens sowie zur Identifikation dieses speziellen Rahmens im Vergleich zu den Rahmen des landesspezifischen Pilotkarials C-CPC. Dem Startfeld Start R folgt ein Feld mit einer Angabe der Länderkennung CC. Das dem Teilfeld der Länderkennung CC nachfolgende Teilfeld trägt Informationen info zu beispielsweise den ersten Betreiber OP1, wobei diese größtenteils den Betreiberinformationen in dem normalen C-CPC-Rahmen entsprechen können. Dem Teilfeld der Informationen info zu dem ersten Betreiber OP1 folgen Teilfelder mit jeweiligen Informationen info zu Betreibern ROP1, ..., ROPn, mit denen der erste Betreiber OP1 ein Roamingabkommen abgeschlossen hat. Entsprechende Informationen werden zu dem zweiten Betreiber OP2 sowie dessen per Roamingabkommen angeschlossenen Betreibern ROP1, ..., ROPn, übertragen. Ein diese Informationen empfangendes Teilnehmerendgerät UE, wird, nachdem es anhand der Länderkennung ermittelt hat, dass es sich außerhalb des Abdeckungsbereiches seines Heimatbetreibers befindet, die Kennung bzw. Informationen bezüglich des Heimatbetreibers in der Folge von Teilfeldern des Rahmens R suchen, und einen oder mehrere innerhalb des Abdeckungsbereiches des länderspezifischen Pilotkanals C-CPC verfügbare Betreiber mit Roamingabkommen ermitteln.

Alternativ ist auch eine Rahmenstruktur des speziellen Rahmens R nach der FIG 5b realisierbar. Nach dieser beispielhaften Struktur werden die Betreiber ROP1, ROP2, mit denen die in dem Abdeckungsbereich des landesspezifischen Pilotkanals C-CPC verfügbaren Betreiber OP1, ..., OPn Roamingabkommen haben, aufgeführt und ihnen jeweils die verfügbaren Betreiber OP1, ..., OPn mit Roamingabkommen in nachfolgenden Teilfeldern zugeordnet.

Aufgrund der steigenden Anzahl Funkzugriffstechnologien bzw. Anpassungen an bestehenden Technologien, beispielsweise in Form von neuen Modulations- oder Kodierarten, Erweiterung des Frequenzspektrum etc., werden Teilnehmerendgeräte zukünftig vermehrt als Endgeräte mit einer so genannten Software-Defined-Radio-Funktionalität (SDR) ausgestaltet sein. Dieses ermöglicht durch rein softwarebasierter Veränderung eine individuelle Anpassung der in die Funkübertragung involvierten Einrichtungen eines Endgerätes an die jeweils geforderte Funkzugriffstechnologie

Aus der deutschen Patentschrift DE 19734933 C1 ist beispielsweise ein Verfahren bekannt, bei dem zwecks einer Anpassung einer Mobilstation an ein von einem Mobilfunksystem unterstütztes Funkzugriffsverfahren auf einem von einer Rundfunksendestation gesendeten Pilotkanal Informationen über zumindest ein Funkzugriffsverfahren des Mobilfunksystems übertragen werden, der Pilotkanal von der Mobilstation empfangen und ausgewertet wird, und die Mobilstation mittels der Informationen ein Funkzugriffsverfahren auswählt und eine Anpassung an dieses Verfahren generiert. Hierzu wird die Mobilstation mittels der Signalisierung beispielsweise auf einen breitbandigen Übertragungskanal verwiesen, auf dem Programmmodule übertragen werden. Diese Programmmodule werden anschließend von der Mobilstation für die Generierung der Anpassung verwendet.

In der FIG 6 ist, basierend auf der Rahmenstruktur des betreiberspezifischen Pilotkanals OP1-CPC der FIG 2, eine Rahmenstruktur angegeben, mittels welcher derartige rekonfigurierbare Endgeräte nach dem erfindungsgemäßen Verfahren unterstützt werden können. In einem speziellen Teilfeld DL des Rahmens sind beispielsweise Informationen zu den jeweils von den nachfolgend aufgeführten Funkzugriffstechnologien enthalten, sodass das Teilnehmerendgerät vor einem Zugriff auf diese Funkzugriffstechnologie eine Anpassung ihrer Einrichtungen an diese Technologie vornehmen kann. Diese Informationen können beispielsweise in Form von Parameterangaben, aber auch in Form von vollständigen Programmmodulen verwirklicht sein. Alternativ zu einem alle verfügbaren Zugriffstechnologien umfassenden Teilfeld kann für jede Zugriffstechnologie ein gesondertes Feld vorgesehen werden bzw. können die Informationen info in den Teilfeldern um derartige Konfigurationsinformationen ergänzt werden.

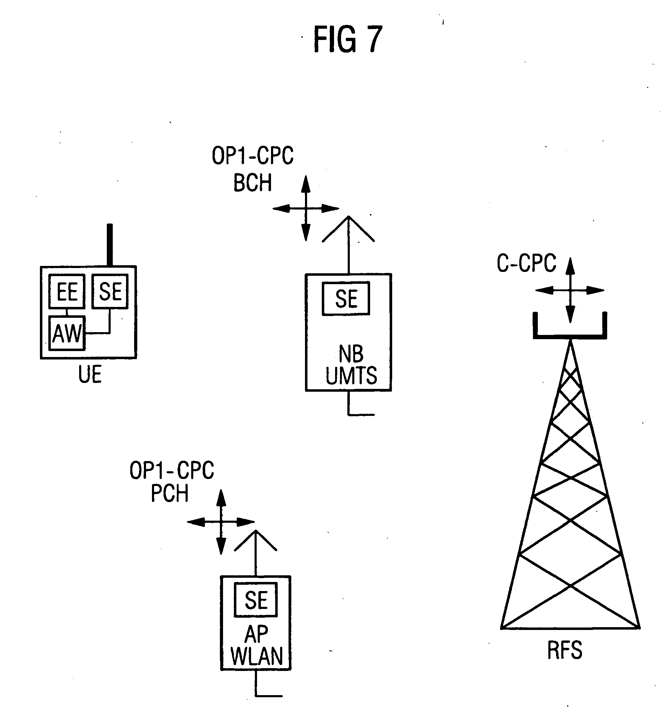

In der FIG 7 sind schließlich die einzelnen Systemkomponenten beispielhaft dargestellt, welche eine Verwirklichung des erfindungsgemäßen Verfahrens ermöglichen. Die geographische Anordnung ist dabei an dem Beispiel der FIG 1 angelehnt. Die Systeme bzw. Netze sind vereinfacht durch eine jeweilige Funkzugangseinrichtung, im Falle des beispielhaften UMTS - Systems eine Basisstation NB (Node B) und im Falle des beispielhaften WLAN-Systems ein so genannter Zugangspunkt AP (Access Point), dargestellt. Diese Basisstation NB bzw. Zugangspunkt AP weisen neben nicht dargestellten bekannten Komponenten und Einrichtungen jeweils eine Sendeeinrichtung SE auf, die über jeweilige Antenneneinrichtungen Signale sowohl des betreiberspezifischen Pilotkanals OP1-CPC als auch des systemspezifischen Steuer- BCH (Broadcast Channel) bzw. Pilotkanals PCH (Pilot Channel) insbesondere omnidirektional auf der Funkschnittstelle aussenden. Beispielhaft wird angenommen, dass Signale des landesspezifischen Pilotkanals C-CPC von einer Rundfunksendestation RFS beispielsweise des öffentlichen Rundfunksystems ausgestrahlt werden. Wie vorstehend erläutert, ist jedoch in gleicher Weise denkbar, dass die Signale des landesspezifischen Pilotkanals C-CPC wie die betreiberspezifischen Pilotkanäle von den Basisstationen bzw. Zugangspunkten der Betreibernetzwerke ausgesendet werden.

Die Signale sowohl des landesspezifischen Pilotkanals C-CPC als auch des betreiberspezifischen Pilotkanals OP1-CPC werden von einer Empfangseinrichtung EE des Teilnehmerendgerätes UE (User Equipment) empfangen und in einer Auswerteeinrichtung AW ausgewertet. Diese Einrichtungen der Teilnehmereinrichtung sowie eine von der Auswerteeinrichtung AW gesteuerte Sendeeinrichtung SE führen den erfindungsgemäßen Zugriff auf die einzelnen Pilotkanäle sowie eine Auswahl eines geeigneten Betreibers bzw. Systems nach den vorstehende beschriebenen erfindungsgemäßen Verfahren durch. Eine Involvierung weiterer bekannter Einrichtungen des Teilnehmerendgerätes UE sind dabei ebenso denkbär wie die ergänzender Einrichtungen, beispielsweise eines speziellen Empfängers für von Rundfunksendestationen ausgesendete Signale des landesspezifischen Pilotkanals C-CPC.

## Patentansprüche

1. Verfahren zum Aufbauen einer Verbindung in einem Funk-Kom munikationssystem, bei dem ein Teilnehmerendgerät (UE)
- basierend auf in einem landesspezifischen Pilotkanal (C-CPC) übertragenen Informationen (info) zu zumindest einem Betreiber (OP1, OP2) eines Funk-Kommunikationssystems einen Betreiber (OP1) auswählt, wobei in dem landesspezifischen Pilotkanal (C-CPC) als Information (info) ein Verweis auf zumindest den betreiberspezifischen Pilotkanal (OP1-CPC) übertragen wird.
- basierend auf in einem betreiberspezifischen Pilotkanal (OP1-CPC) des ausgewählten Betreibers (OP1) übertragenen Informationen (info) zu zumindest einem Funk-Kommunikationssystem ein Funk-Kommunikationssystem (RAT1, UMTS) auswählt, wobei in dem betreiberspezifischen Pilotkanal (OP1-CPC) als Information (info) ein Verweis auf zumindest einen systemspezifischen Pilotkanal (RAT1-BCH) des zumindest einen Funk-Kommunikationssystems (RAT1,UMTS) übertragen wird und
- einen Zugriff auf das ausgewählte Funk-Kommunikationssystem (RAT1,UMTS) zum Aufbau einer Verbindung durchführt.

2. Verfahren nach Anspruch 1
in dem systemspezifischen Pilotkanal (RAT1-BCH) Informationen eines Synchronisationskanals, Steuerkanals und/oder Pilotkanals übertragen werden.

3. Verfahren nach Anspruch 1 oder 2, bei dem
der zumindest eine betreiberspezifische Pilotkanal (OP1-CPC) und der zumindest eine systemspezifische Pilotkanal (RAT1-BCH) von zumindest einer Funkzugangseinrichtung (NB,AP) des zumindest einen Funk-Kommunikationssystems ausgesendet werden.

4. Verfahren nach einem vorstehenden Anspruch, bei dem der landesspezifische Pilotkanal (C-CPC) von zumindest einer Funkzugangseinrichtung (NB, AP) des zumindest einen Funk-Kommunikationssystems und/oder einer Rundfunksendestation (RFS) eines öffentlichen oder privaten Rundfunksystem ausgesendet wird.

5. Verfahren nach einem vorstehenden Anspruch, bei dem in dem landesspezifischen Pilotkanal (C-CPC) Informationen (info) zu Betreibern (ROP1,ROPn) übertragen werden, mit denen der zumindest eine Betreiber (OP1) nationale und/oder internationale Roamingabkommen unterhält.

6. Verfahren nach Anspruch 5, bei dem
die Informationen (info) zu Betreibern (ROP1,ROPn) mit Roamingabkommen in spezifischen Rahmen (R) innerhalb einer Abfolge von Rahmen des landesspezifischen Pilotkanals (C-CPC) übertragen werden.

7. Verfahren nach einem vorstehenden Anspruch, bei dem in dem betreiberspezifischen Pilotkanal (OP1-CPC) Informationen (DL) bezüglich einer systemspezifischen Konfiguration des Teilnehmerendgerätes (UE) übertragen werden.

8. Verfahren zum Betreiben eines Funk-Kommunikationssystems, bei dem
von zumindest einer Funkzugangseinrichtung (NB,AP) des Funk-Kommunikationssystems Signale zumindest eines landesspezifischen Pilotkanals (C-CPC) mit Informationen (info) zu zumindest einem Betreiber (OP1,OP2) eines Funk-Kommunikationssystems, wobei in dem landesspezifischen Pilotkanal (C-CPC) als Information (info) ein Verweis auf den zumindest einen betreiberspezifischen Pilotkanals(OP1-CPC) übertragen wird, zumindest eines-betreiberspezifischen Pilotkanals (OP1-CPC) Informationen (info) zu zumindest einem Funk-Kommunikationssystem (RAT1, UMTS, WLAN) wobei in dem betreiberspezifischen Pilotkanal (OP1-CPC) als Information (info) ein Verweis auf zumindest einen systemspezifischen Pilotkanal (RAT1-BCH) des zumindest einen Funk-Kommunikationssystems (RAT1,UMTS), übertragen wird, und zumindest eines systemspezifischen Pilotkanals (RAT1-BCH) ausgesendet werden.

9. Funk-Kommunikationssystem, aufweisend zumindest eine Funkzugangseinrichtung (NB,AP) mit zumindest einer Sendeeinrichtung (SE) zum Aussenden von Signalen zumindest eines landesspezifischen Pilotkanals (C-CPC) mit Informationen (info) zu zumindest einem Betreiber (OP1,OP2) eines Funk-Kommunikationssystems wobei in dem landesspezifischen Pilotkanal.(C-CPC) als Information (info) ein Verweis auf zumindest einen betreiberspezifischen Pilotkanal (OP1-CPC) übertragen wird, zumindest eines betreiberspezifischen Pilotkanals (OP1-CPC) Informationen (info) zu zumindest einem Funk-Kommunikationssystem (RAT1,UMTS,WLAN) wobei in dem betreiberspezifischen Pilotkanal (OP1-CPC) als Information (info) ein Verweis auf zumindest einen systemspezifischen Pilotkanal (RAT1-BCH) des zumindest einen Funk-Kommunikationssystems (RAT1,UMTS) übertragen wird, sowie zumindest eines systemspezifischen Pilotkanals (RAT1-BCH).

10. Teilnehmerendgerät (UE), aufweisend zumindest
- eine Empfangseinrichtung (EE) zum Empfangen zumindest eines landesspezifischen Pilotkanals (C-CPC)wobei in dem landesspezifischen Pilotkanal (C-CPC) als Information (info) ein Verweis auf zumindest einen betreiberspezifischen Pilotkanal (OP1-CPC) übertragen wird, eines betreiberspezifischen Pilotkanals (OP1-CPC) wobei in dem betreiberspezifischen Pilotkanal (OP1-CPC) als Information (info) ein Verweis auf zumindest einen systemspezifischen Pilotkanal (RAT1-BCH) eines zumindest einen Funk-Kommunikationssystems (RAT1, UMTS) übertragen wird sowie eines systemspezifischen Pilotkanals (RAT1-BCH),
- eine Auswerteeinrichtung (AW) zum Auswerten von Informationen (info) des empfangenen zumindest einen landesspezifischen Pilotkanals (C-CPC) bezüglich zumindest einem Betreiber (OP1, OP2, ..., OPn) und zum Auswählen eines Betreibers (OP1), zum Auswerten von Informationen (info) des empfangenen betreiberspezifischen Pilotkanals (OP1-CPC) des ausgewählten Betreibers (OP1) und zum Auswählen eines Funk-Kommunikationssystems (RAT1, UMTS), und zum Auswerten von Informationen des empfangenen systemspezifischen Pilotkanals (RAT1-BCH) des ausgewählten Funk-Kommunikationssystems (RAT1,UMTS) und zum Entscheiden über einen Zugriff auf das ausgewählte Funk-Kommunikationssystem (RAT1,UMTS), und
- eine Sendeeinrichtung (SE) zum Aussenden von Signalen für einen Zugriff auf das ausgewählte Funk-Kommunikationssystem (RAT1,UMTS).

## Claims

1. Method for the establishment of a connection in a radio communication system, wherein a user terminal (UE)
- selects an operator (OP1) on the basis of information (info), transmitted in a country-specific pilot channel (C-CPC), on at least one operator (OP1, OP2) of a radio communication system, a reference to at least the operator-specific pilot channel (OP1-CPC) being transmitted as information (info) in the country-specific pilot channel (C-CPC),
- on the basis of information (info), transmitted in an operator-specific pilot channel (OP1-CPC) of the selected operator (OP1), on at least one radio communication system, selects a radio communication system (RAT1, UMTS), a reference to at least one system-specific pilot channel (RAT1-BCH) of the at least one radio communication system (RAT1, UMTS) being transmitted as information (info) in the operator-specific pilot channel (OP1-CPC), and
- carries out an access to the selected radio communication system (RAT1, UMTS) for the establishment of a connection.

2. Method according to Claim 1, wherein information of a synchronization channel, control channel and/or pilot channel is transmitted in the system-specific pilot channel (RAT1-BCH).

3. Method according to Claim 1 or 2, in which the at least one operator-specific pilot channel (OP1-CPC) and the at least one system-specific pilot channel (RAT1-BCH) are sent out by at least one radio access device (NB, AP) of the at least one radio communication system.

4. Method according to a preceding claim, in which the country-specific pilot channel (C-CPC) is sent out by at least one radio access device (NB, AP) of the at least one radio communication system and/or a broadcast transmitting station (RFS) of a public or private broadcasting system.

5. Method according to a preceding claim, in which information (info) on operators (ROP1, ROPn), with whom the at least one operator (OP1) maintains national and/or international roaming agreements, is transmitted in the country-specific pilot channel (C-CPC).

6. Method according to Claim 5, in which the information (info) on operators (ROP1, ROPn) with roaming agreements is transmitted in specific frames (R) within a sequence of frames of the country-specific pilot channel (C-CPC).

7. Method according to a preceding claim, in which information (DL) with respect to a system-specific configuration of the user terminal (UE) is transmitted in the operator-specific pilot channel (OP1-CPC).

8. Method for operating a radio communication system, in which
signals of at least one country-specific pilot channel (C-CPC) with information (info) on at least one operator (OP1, OP2) of a radio communication system, a reference to the at least one operator-specific pilot channel (OP1-CPC) being transmitted as information (info) in the country-specific pilot channel (C-CPC), of at least one operator-specific pilot channel (OP1-CPC) with information (info) on at least one radio communication system (RAT1, UMTS, WLAN), a reference to at least one system-specific pilot channel (RAT1-BCH) of the at least one radio communication system (RAT1, UMTS) being transmitted as information (info) in the operator-specific pilot channel (OP1-CPC), and of at least one system-specific pilot channel (RAT1-BCH) are sent out by at least one radio access device (NB, AP) of the radio communication system.

9. Radio communication system having at least one radio access device (NB, AP) comprising at least one transmitting device (SE) for sending out signals of at least one country-specific pilot channel (C-CPC) with information (info) on at least one operator (OP1, OP2) of a radio communication system, a reference to the at least one operator-specific pilot channel (OP1-CPC) being transmitted as information (info) in the country-specific pilot channel (C-CPC), of at least one operator-specific pilot channel (OP1-CPC) with information (info) on at least one radio communication system (RAT1, UMTS, WLAN), a reference to at least one system-specific pilot channel (RAT1-BCH) of the at least one radio communication system (RAT1, UMTS) being transmitted as information (info) in the operator-specific pilot channel (OP1-CPC), and of at least one system-specific pilot channel (RAT1-BCH).

10. User terminal (UE) having at least
- one receiving device (EE) for receiving at least one country-specific pilot channel (C-CPC), a reference to the at least one operator-specific pilot channel (OP1-CPC) being transmitted as information (info) in the country-specific pilot channel (C-CPC), one operator-specific pilot channel (OP1-CPC), a reference to at least one system-specific pilot channel (RAT1-BCH) of an at least one radio communication system (RAT1, UMTS) being transmitted as information (info) in the operator-specific pilot channel (OP1-CPC), and one system-specific pilot channel (RAT1-BCH),
- one evaluating device (AW) for evaluating information (info) of the received at least one country-specific pilot channel (C-CPC) with respect to at least one operator (OP1, OP2, ..., OPn) and for selecting an operator (OP1), for evaluating information (info) of the received operator-specific pilot channel (OP1-CPC) of the selected operator (OP1) and for selecting a radio communication system (RAT1, UMTS) and for evaluating information of the received system-specific pilot channel (RAT1-BCH) of the selected radio communication system (RAT1, UMTS) and for deciding on an access to the selected radio communication system (RAT1, UMTS), and
- one transmitting device (SE) for sending out signals for an access to the selected radio communication system (RAT1, UMTS).

## Revendications

1. Procédé d'établissement d'une connexion dans un système de radiocommunication, dans lequel un terminal d'abonné (UE)
- sélectionne un opérateur (OP1) sur la base d'informations (info) transmises dans un canal pilote (C-CPC), spécifique au pays, vers au moins un opérateur (OP1, OP2) d'un système de radiocommunication, un renvoi à au moins le canal pilote (OP1-CPC) spécifique à l'opérateur étant transmis en tant qu'information (info) dans le canal pilote (C-CPC) spécifique au pays,
- sélectionne un système de radiocommunication (RAT1, UMTS) sur la base d'informations (info) transmises dans un canal pilote (OP1-CPC), spécifique à l'opérateur, de l'opérateur (OP1) sélectionné vers au moins un système de radiocommunication, un renvoi à au moins un canal pilote (RAT1-BCH), spécifique au système, de l'au moins un système de radiocommunication (RAT1, UMTS) étant transmis en tant qu'information (info) dans le canal pilote (C-CPC) spécifique à l'opérateur (OP1-CPC) et
- un accès au système de radiocommunication (RAT1, UMTS) sélectionné étant exécuté pour établir une connexion.

2. Procédé selon la revendication 1,
dans lequel des informations d'un canal de synchronisation, d'un canal de commande et/ou d'un canal pilote sont transmises dans le canal pilote (RAT1-BCH) spécifique au système.

3. Procédé selon la revendication 1 ou 2, dans lequel
l'au moins un canal pilote (OP1-CPC) spécifique à l'opérateur et l'au moins un canal pilote (RAT1-BCH) spécifique au système sont émis par au moins un dispositif d'accès radio (NB, AP) de l'au moins un système de radiocommunication.

4. Procédé selon une quelconque revendication précédente, dans lequel
le canal pilote (C-CPC) spécifique au pays est émis par au moins un dispositif d'accès radio (NB, AP) de l'au moins un système de radiocommunication et/ou d'une station radio (RFS) d'un système radio public ou privé.

5. Procédé selon une quelconque revendication précédente, dans lequel
des informations (info) sont transmises à des opérateurs (ROP1, ROPn) dans le canal pilote (C-CPC) spécifique au pays, avec lesquels l'au moins un opérateur (OP1) entretient des conventions de roaming nationales et/ou internationales.

6. Procédé selon la revendication 5, dans lequel
les informations (info) sont transmises à des opérateurs (ROP1, ROPn) ayant des conventions de roaming, dans des trames spécifiques (R) dans une séquence de trames du canal pilote (C-CPC) spécifique au pays.

7. Procédé selon une quelconque revendication précédente,
dans lequel
des informations (DL) relatives à une configuration, spécifique au système, du terminal d'abonné (UE) sont transmises dans le canal pilote (OP1-CPC) spécifique à l'opérateur.

8. Procédé destiné au fonctionnement d'un système de radiocommunication, dans lequel
des signaux d'au moins un canal pilote (C-CPC), spécifique au pays, sont émis avec des informations (info) à au moins un opérateur (OP1, OP2) d'un système de radiocommunication par au moins un dispositif d'accès radio (NB, AP) du système de radiocommunication, un renvoi à l'au moins un canal pilote (OP1-CPC), spécifique à l'opérateur, étant transmis en tant qu'information (info) dans le canal pilote (C-CPC) spécifique au pays, des informations (info) d'un canal pilote (OP1-CPC) spécifique à l'opérateur étant transmises à au moins un système de radiocommunication (RAT1, UMTS, WLAN), un renvoi à au moins un canal pilote (RAT1, BCH), spécifique au système, de l'au moins un système de radiocommunication (RAT1, UMTS) étant transmis en tant qu'information (info) dans le canal pilote (OP1-CPC) spécifique à l'opérateur, et d'au moins un canal pilote (RAT1-BCH) spécifique au système étant transmises.

9. Système de radiocommunication présentant au moins un dispositif d'accès radio (NB, AP) comprenant au moins un dispositif d'émission (SE) pour émettre des signaux d'au moins un canal pilote (C-CPC), spécifique au pays, avec des informations (info) à au moins un opérateur (OP1, OP2) d'un système de radiocommunication, un renvoi à un au moins un canal pilote (OP1-CPC), spécifique à l'opérateur, étant transmis en tant qu'information (info) dans le canal pilote (C-CPC) spécifique au pays, des informations (info) au moins d'un canal pilote (OP1-CPC) spécifique à l'opérateur étant transmises à au moins un système de radiocommunication (RAT1, UMTS, WLAN), un renvoi à au moins un canal pilote (RAT1, BCH), spécifique au système, de l'au moins un système de radiocommunication (RAT1, UMTS) étant transmis en tant qu'information (info) dans le canal pilote (OP1-CPC) spécifique à 1"opérateur ainsi que d'un canal pilote (RAT1-BCH) spécifique au système.

10. Terminal d'abonné (UE) présentant au moins
- un dispositif de réception (EE) destiné à la réception d'au moins un canal pilote (C-CPC) spécifique au pays, un renvoi à au moins un canal pilote (OP1-CPC), spécifique à 1"opérateur, étant transmis en tant qu'information (info) dans le canal pilote (C-CPC) spécifique au pays, d'un canal pilote (OP1-CPC) spécifique à l'opérateur, un renvoi à au moins un canal pilote (RAT1-BCH), spécifique au système, d'au moins un système de radiocommunication (RAT1, UMTS) étant transmis en tant qu'information (info) dans le canal pilote (OP1-CPC) spécifique à l'opérateur ainsi que d'un canal pilote (RAT1-BCH) spécifique au système,
- un dispositif d'évaluation (AW) destiné à évaluer des informations (info) de l'au moins un canal pilote (C-CPC) reçu, spécifique au pays, relatives à au moins un opérateur (OP1, OP2, ..., OPn) et à sélectionner un opérateur (OP1), destiné à évaluer des informations (info) du canal pilote (OP1-CPC) reçu, spécifique à l'opérateur, de l'opérateur sélectionné (OP1) et à sélectionner un système de radiocommunication (RAT1, UMTS), et à évaluer des informations du canal pilote (RAT1-BCH) reçu, spécifique au système, du système de radiocommunication sélectionné (RAT1, UMTS) et à décider d'un accès au système de radiocommunication sélectionné (RAT1, UMTS), et
- un dispositif d'émission (SE) destiné à émettre des signaux pour un accès au système de radiocommunication sélectionné (RAT1, UMTS).
